# EUROPÄISCHE PATENTSCHRIFT

(11) **EP 0 401 422 B1**
(45) Veröffentlichungstag und Bekanntmachung des Hinweises auf die Patenterteilung: **08.12.1993**
(21) Anmeldenummer: 89114766.2
(22) Anmeldetag: 09.08.1989
(51) Int. Cl.: B65B 9/12, B65B 51/30

(54) **Abfüll- und Verpackungsmaschine**
Filling and packaging machine
Machine de remplissage et d'emballage

(30) Priorität: 06.06.1989 IT 483789
(43) Veröffentlichungstag der Anmeldung: 12.12.1990
(73) Patentinhaber: ITALPACK S.R.L., Mercogliano (AV) (IT)
(72) Erfinder: Abate, Alessandro, Mercogliano (Av) (IT)
(74) Vertreter: Zinnecker, Armin, Dipl.-Ing.

(56) Entgegenhaltungen:
- CA-A- 412 685
- DE-B- 1 213 781
- US-A- 3 006 121
- US-A- 3 426 499
- US-A- 4 074 504
- US-A- 4 442 656

## Beschreibung

Die Erfindung betrifft eine Abfüll- und Verpackungsmaschine zum kontinuierlichen Abfüllen und Verpacken von Behältern aus einem Folienschlauch nach dem Oberbegriff des Anspruchs 1.

Eine derartige Abfüll- und Verpackungsmaschine ist aus der CH-A-412 685 bekannt.

Aus der DE-B-1 213 781 ist eine Vorrichtung zum Herstellen gefüllter und verschlossener quaderförmiger Packungen aus einem siegelbaren Schlauch bekannt, bei dem ein an einem Ende verschlossener und unter erhöhtem Innendruck stehender Schlauchabschnitt allseitig in einer der Packungsgestalt entsprechenden Flächenumgrenzung eingeschlossen und abgestützt und der eingeschlossene verformte und gefüllte Schlauchabschnitt durch eine Quersiegelnaht verschlossen und in der Nahtmitte vom Schlauch getrennt wird. Damit aus einem Schlauch aus Verpackungsmaterial formhaltige, gefüllte Packungen hergestellt werden können, die sich durch ausgeprägte scharfe Kanten sowie durch eine einheitliche Füllgutmenge auszeichnen, werden beim allseitigen Umschließen des Schlauchabschnittes gleichzeitig an beiden stirnseitigen Enden der Packung in bekannter Art ebene Stirnflächen mit abstehenden Dreieckklappen gebildet. Die Vorrichtung weist Führungsteile auf, die mit derselben Geschwindigkeit wie der Folienschlauch bewegt werden und die einen U-förmigen Querschnitt besitzten.

Aus der US-A-4 442 656 ist eine Vorrichtung zum Herstellen gefüllter und verschlossener Packungen bekannt, die Formteile auf einander gegenüberliegenden Seiten des Folienschlauches vorgesehen sind und die in Längsrichtung des Folienschlauches zwei diesem zugewandte, dornförmige Erhebungen besitzen.

Aufgabe der Erfindung ist es, eine Abfüll- und Verpackungsmaschine der eingangs angegebenen Art zu schaffen, mit der ein genaues Einstellen des abzupackenden Flüssigkeitsvolumens möglich ist.

Erfindungsgemäß wird diese Aufgabe durch die im kennzeichnenden Teil des Anspruchs 1 angegebenen Merkmale gelöst. Durch die Erfindung wird eine verbesserte Abfüll- und Verpackungsmaschine zum kontinuierlichen Abfüllen und Verpacken von Behältern geschaffen, die es ermöglicht, die Behälter kontinuierlich aus einem Folienschlauch zu bilden, zu füllen und anschließend fertig zu konfektionieren. Die Abfüll- und Verpackungsmaschine besteht aus einem Gestell, in dem ein langgestreckter, im Querschnitt rechteckiger Folienschlauch in vertikaler Richtung nach unten führbar ist, mehreren jeweils gleich beabstandeten Führungsteilen, die auf einander jeweils gegenüberliegenden Seiten des Folienschlauches mit derselben Geschwindigkeit wie dieser längsbeweglich führbar sind und die ein dem Folienschlauch zugewandtes, U-förmiges Teil mit einer an eine Fläche des Folienschlauches in Anlage bringbaren Basisfläche und zwei rechtwinkelig abstehenden, den Folienschlauch einfassenden Seitenflächen besitzten, mehreren jeweils gleich beabstandeten, zwischen den Führungsgliedern angeordneten und mit diesen mitbewegbaren, in Richtung zum Folienschlauch konvex ausgebildeten Druckteilen, die eine dem Folienschlauch zugewandte Stirnfläche und daran anschließende Seitenflächen besitzen, und mindestens jeweils einem Formteil auf einander gegenüberliegenden Seiten des Folienschlauches, die in einer vertikalen, senkrecht zur Ebene der Führungsteile und Druckteile verlaufenden Ebene oberhalb des Eingriffsbereichs der Führungsteile und Druckteile mit derselben Geschwindigkeit wie der Folienschlauch mit diesem in Eingriff bringbar sind und die in Längsrichtung des Folienschlauches zwei diesem zugewandte, dornförmige Erhebungen besitzt.

Der langgestreckte, im Querschnitt rechteckige Folienschlauch ist in dem Gestell in vertikaler Richtung nach unten führbar. Er kann in diesem Bereich bereits mit dem zu verpackenden Gut gefüllt werden. Dies ist insbesondere dann vorteilhaft, wenn eine Flüssigkeit verpackt werden soll. In diesem Fall kann nämlich die Herstellung und Verschließung des Behälters unterhalb des Flüssigkeitsspiegels erfolgen. Die Zuführung der zu verpackenden Flüssigkeit in die Maschine wird derart gesteuert, daß der Flüssigkeitsspiegel stets höher liegt als die Stelle, an der der Behälter verschlossen wird. Hierdurch kann es mit Sicherheit ausgeschlossen werden, daß neben der zu verpackenden Flüssigkeit auch Luft in den Behälter eingeschlossen wird.

Auf einander jeweils gegenüberliegenden Seiten des Folienschlauches sind jeweils gleich beabstandete Führungsteile mit derselben Geschtindigkeit wie der Folienschlauch beweglich führbar. Die Führungsteile besitzen ein dem Folienschlauch Zugewandtes U-förmiges Teil mit einer an eine Fläche des Folienschlauches in Anlage bringbaren Basisfläche und zwei rechtwinkelig abstehenden, den Folienschlauch einfassenden Seitenflächen. Zwei jeweils gegenüberliegende Führungsteile fassen also den Folienschlauch im Bereich eines Behälters nahezu vollständig ein. Dadurch wird der den späteren Behälter bildende Teil des Folienschlauches in seiner Form auch dann stabilisiert, wenn das Verpackungsgut, insbesondere eine zu verpackende Flüssigkeit, bereits eingefüllt ist.

Zwischen den Führungsgliedern sind mit diesen mitbewegbare, in Richtung zum Folienschlauch konvex ausgebildete Druckteile angeordnet, die eine dem Folienschlauch zugewandte Stirnfläche und daran anschließende Seitenflächen besitzen. Die Druckteile drücken den Folienschlauch zwischen den Bereichen zusammen, die später die Behälter bilden. Im Bereich der Druckteile werden also die Verbindungsbereiche zwischen den späteren Behälterbereichen hergestellt. Zu diesem Zweck sind die Stirnflächen derart angeordnet, daß sie einander in einem Abstand gegenüberliegen, der etwa der doppelten Folienstärke entspricht. Der Abstand kann auch geringer sein, um einen entsprechenden Druck auf die dazwischen befindlichen zwei Folien-Lagen auszuüben. Das zu verpackende Gut, insbesondere eine Flüssigkeit, wird also vollständig aus dem Bereich zwischen den beiden Stirnflächen entfernt. Die Druckteile sind in ihrem mit dem Folienschlauch in Eingriff gelangenden Bereich konvex ausgebildet, um sie anschließend wieder problemlos von dem Folienschlauch wegbewegen zu können.

Auf einander gegenüberliegenden Seiten des Folienschlauches sind mindestens jeweils ein Formteil vorgesehen, die in einer vertikalen, senkrecht zur Ebene der Führungsteile und Druckteile verlaufenden Ebene oberhalb des Eingriffsbereichs der Führungsteile und Druckteile mit derselben Geschwindigkeit wie der Folienschlauch mit diesem in Eingriff bringbar sind und die in Längsrichtung des Folienschlauches zwei diesem zugewandte, dornförmige Erhebungen besitzen. Durch diese dornförmigen Erhebungen werden an den beiden Enden des späteren Behälters die "Ohren" gebildet. Der aus dem Folienschlauch zu formende Behälter muß nämlich an seinen beiden Enden - gesehen in Längsrichtung des Folienschlauches - gefaltet werden. Diese Faltung muß nach innen erfolgen, um dem Behälter ein ansprechendes Aussehen zu geben und um die ferigen Behälter einfach um raumsparend stapeln zu können. Es wird also eine quaderförmige Ausgestaltung des fertigen Behälters angestrebt, die nur dann erreicht werden kann, wenn der Behälter an seinen Enden nach innen gefaltet wird. Zu diesem Zweck drücken die dornförmigen Erhebungen das Material des Folienschlauches nach innen. Die Formteile sind oberhalb des Eingriffsbereichs der Führungsteile und Druckteile angeordnet, damit die Formteile vor den Führungsteilen und Druckteilen mit dem Folienschlauch in Eingriff gelangen und damit eine Behinderung mit letzteren ausgeschlossen ist. Die Ebenen der Formteile einerseits und der Führungsteile und Druckteile andererseits verlaufen senkrecht zueinander, da die Eindrückungen für die späteren Behälter- "Ohren" ebenfalls senkrecht zu den zusammengedrückten Abschlußflächen der Behälter angeordnet sein müssen.

Jedes Führungsteil besitet eine senkrecht zum Folienschlauch verlaufende Innenführung, in der ein Bolzen längsverschieblich gelagert ist, der an seinem dem Folienschlauch abgewandten Ende eine auf einer gestellfesten Nockenbahn abrollende Rolle und an seinem dem Folienschlauch zugewandten Ende eine parallel zu diesem verlaufende Dosierungsfläche besitzt. Dies Ausgestaltung ist insbesondere dann von Vorteil, wenn eine Flüssigkeit verpackt werden soll. Durch eine Veränderung des Abstandes zwischen zwei einander jeweils gegenüberliegenden Dosierungsflächen kann das in einen Behälter zu verpackende Flüssigkeitsvolumen verändert werden. Je geringer der Abstand der einander jeweils gegenüberliegenden Dosierungsflächen ist desto geringer ist auch das je Behälter abgepackte Flüssigkeitsvolumen. Der Abstand der Dosierungsflächen kann seinerseits durch eine Veränderung der gestellfesten Nockenbahn geändert werden. Durch eine Justierung dieser Nockenbahn ist also ein genaues Einstellen des abzupackenden Flüssigkeitsvolumens möglich.

Vorteilhafte Weiterbildungen sind in den Unteransprüchen beschrieben.

Vorzugsweise ist in der Innenführung des Führungsteils eine den Bolzen umschließende, sich einerseits auf einem Anschlag des Führungsteils und andererseits auf einem Anschlag des Bolzens abstützende Druckfeder vorgesehen. Hierdurch ist der Bolzen federbelastet, so daß die Rolle des Bolzens stets mit der Nockenbahn in Kontakt ist.

Vorzugsweise ist die Nockenbahn verstellbar, um die Maschine an verschiedene zu verpackende Flüssigkeitsvolumina anpassen zu können.

Nach einer vorteilhaften Weiterbildung sind die Seitenflächen der Druckteile eben und verlaufen diese Seitenflächen im stumpfen Winkel von der Stirnfläche weg. Diese Ausgestaltung ist besonders einfach und kostengünstig.

Vorzugsweise besitzt jedes Druckteil eine senkrecht zum Folienschlauch verlaufende Innenführung, in der ein Bolzen längsverschieblich gelagert ist, der an seinem dem Folienschlauch abgewandten Ende eine auf einer gestellfesten Nockenbahn abrollende Rolle und an seinem dem Folienschlauch zugewandten Ende die parallel zu diesem verlaufende Stirnfläche besitzt. Der Abstand der Nockenbahn von der Mittenachse des Folienschlauches bestimmt auf diese Weise über die Rolle und den Bolzen den Abstand zwischen zwei einander gegenüberliegenden Stirnflächen zweier Druckteile. Wie bereits oben ausgeführt, muß dieser Abstand in etwa so groß sein wie die doppelte Stärke der Folienbahn. Durch eine entsprechende Anordnung der Nockenfläche kann dies erreicht werden. Wenn es erforderlich wird, den Druck zu vergrößern, kann der Abstand zwischen der Nockenbahn und der Mittenachse des Folienschlauches verkleinert werden, so daß der Abstand zwischen einander gegenüberliegenden Stirnflächen ebenfalls verkleinert wird. Die umgekehrte Vorgehensweise wird dann gewählt, wenn der Druck vermindert werden soll.

Vorzugsweise ist in der Innenführung eine den Bolzen umschließende, sich einerseits auf einem Anschlag des Druckteils und andererseits auf einem Anschlag des Bolzens abstützende Druckfeder vorgesehen. Hierdurch ist der die Stirnfläche tragende Bolzen federbelastet, so daß die Rolle des Bolzens stets mit der Nockenbahn in Kontakt ist.

Vorzugsweise ist die Nockenbahn verstellbar, insbesondere höhenverstellbar. Durch die Höhenverstellbarkeit kann die zeitliche Abfolge des Eingriffs der Stirnflächen beeinflußt werden.

Die Führungsteile und/oder die Druckteile können an zwei in einer vertikalen Ebene beidseits des Folienschlauches und symmetrisch zu diesem verlaufenden Ketten angeordnet sein. Jede Kette kann über ein oberes und unteres, um eine jeweils horizontale, im Abstand vom Folienschlauch angeordnete Achse drehbar gelagertes Kettenrad geführt sein.

Nach einer vorteilhaften Weiterbildung sind die Formteile an den Umfangsflächen von zwei Zylindern angebracht, die um zwei von dem Folienschlauch gleich beabstandete Achsen auf gegenüberliegenden Seiten desselben drehbar gelagert sind. An der Umfangsfläche jedes Zylinders können mehrere Formteile im jeweils gleichen Abstand voneinander angeordnet sein. Vorzugsweise ist in einer Führung senkrecht zur Umfangsfläche der Zylinder jeweils ein Bolzen längsverschieblich gelagert, der an seinem dem Folienschlauch abgewandeten Ende eine auf einer gestellfesten Nockenbahn abrollende Rolle und an seinem dem Folienschlauch zugewandten Ende die diesem zugewandten, dornförmigen Erhebungen besitzt. Durch eine entsprechende Ausgestaltung der Nockenbahn können die dornförmigen Erhebungen dadurch in Richtung zur Längsachse des Folienschlauches bewegt werden.

Vorzugsweise ist in der Führung senkrecht zur Umfangsfläche der Zylinder eine den Bolzen umschließende, sich einerseits an der Umfangsfläche des Zylinders und andererseits auf einem Anschlag des Bolzens abstützende Druckfeder vorgesehen. Der Bolzen ist also federbelastet, so daß er stets mit der Nockenbahn in Kontakt ist.

Eine vorteilhafte Weiterbildung ist dadurch gekennzeichnet, daß die Nockenbahn in demjenigen Bereich, in dem die dornförmigen Erhebungen mit dem Folienschlauch in Eingriff gelangen, eine Erhebung aufweist. Die dornförmigen Erhebungen werden also zur Bildung der Ohren im Eingriffsbereich mit dem Folienschlauch auf diesen zubewegt.

Vorzugsweise sind die Achsen der Zylinder mit dem Antrieb der Führungsteile und Druckteile bzw. dem Antrieb von deren Ketten durch eine Zahnradgetriebe bzw. Winkelgetriebe und/oder Zahnriemen verbunden. Hierdurch wird auf besonders einfache Weise gewährleistet, daß die Eingriffsbereiche der dornförmigen Erhebungen und die Eingriffsbereiche der Führungsteile und Druckteile relativ zueinander stets gleich sind.

Vorzugsweise ist in den Stirnflächen der Druckteile eine Schweißvorrichtung angeordnet. Besonders vorteilhaft ist es, wenn diese Schweißvorrichtung aus elektrischen Heizdrähten besteht. Durch diese Schweißvorrichtung wird Wärme auf die von den Stirnflächen zusammengedrückten Folienbereiche eingebracht, die zu einer Verschweißung der einander gegenüberliegenden Folienbahnen führt.

Ein Ausführungsbeispiel der Erfindung wird nachstehend anhand der beigefügten Zeichnungen im einzelnen erläutert. In den Zeichnungen zeigt
- Fig. 1: eine Vorderansicht des Einzugsbereiches der Maschine, teilweise im Schnitt,
- Fig. 2: einen Horizontalschnitt durch die Maschine, teilweise in verschiedenen Ebenen,
- Fig. 3: eine Seitenansicht in einer vertikalen, zur Ebene der Figur 1 senkrecht verlaufenden Ebene oberhalb des Einzugsbereichs der Maschine,
- Fig. 4: einander gegenüberliegende Druckteile in einer vergrößerten Darstellung von oben,
- Fig. 5: einander gegenüberliegende Führungsteile in einer vergrößerten Darstellung von oben,
- Fig. 6: eine Kette mit einander abwechselnden Druckteilen und Führungsteilen,
- Fig. 7: die in Fig. 6 gezeigte Kette in einer Darstellung von innen,
- Fig. 8: die in Fig. 6 dargestellte Kette in einer Ansicht von außen und
- Fig. 9: die Maschine in einer schematischen Ansicht von vorne.

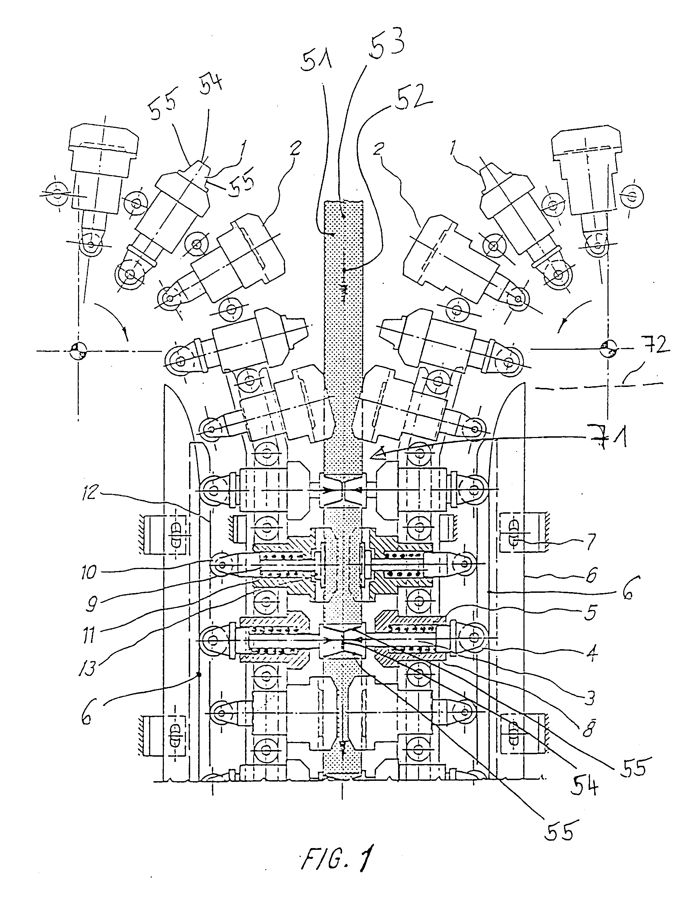

Die Figur 1 zeigt den oberen Einzugsbereich einer Abfüll- und Verpackungsmaschine zum kontinuierlichen Abfüllen und Verpacken von Behältern aus einem Folienschlauch 51. In der Maschine ist der langgestreckte, im Querschnitt rechtecktige Folienschlauch 51 in vertikaler Richtung nach unten führbar, wie durch den Pfeil 52 angedeutet. Es sind mehrerer jeweils gleich beabstandete Führungsteile 2 vorgesehen, die auf einander jeweils gegenüberliegenden Seiten des Folienschlauches 51 mit derselben Geschwindigkeit wie dieser längsbeweglich führbar sind. Weiterhin sind mehrere jeweils gleich beabstandete, zwischen den Führungsteilen 2 angeordnete und mit diesem mitbewegbare, in Richtung zum Folienschlauch 51 konvex ausgebildete Druckteile 1 vorgesehen. Jedes Führungsteil 2 besitzt eine senkrecht zum Folienschlauch 51 verlaufende Innenführung, in der ein Bolzen 9 längsverschieblich gelagert ist, der an seinem dem Folienschlauch 51 abgewandten Ende eine auf einer gestellfesten Nockenbahn 12 abrollende Rolle 10 und an seinem dem Folienschlauch 51 zugewandten Ende eine parallel zu diesem verlaufende Dosierungsfläche 13 besitzt. In der Innenführung ist eine den Bolzen 9 umschließende Durckfeder 11 vorgesehen, die sich einerseits auf einem Anschlag des Führungsteils 2 und andererseits auf einem Anschlag des Bolzens 9 abstützt. Der Bolzen ist dadurch auf Druck belastet. Hierdurch wird sichergestellt, daß die Rolle 10 stets in Kontakt mit der Nockenbahn 12 ist. Durch den Abstand der Nockenbahn 12 von der Mittenachse 53 der Folienbahn 51 wird gleichzeitig der Abstand zwischen der Dosierungsfläche 13 und der Mittenachse festgelegt.

Jedes Druckteil besitzt eine dem Folienschlauch zugewandte Stirnfläche 54 und daran anschließende Seitenflächen 55. Die Seitenflächen 55 der Druckteile 1 sind eben; sie verlaufen im stumpfen Winkel von der Stirnfläche 54 weg. Weiterhin besitzt jedes Druckteil 1 eine senkrecht zum Folienschlauch 51 verlaufende Innenführung, in der ein Bolzen 3 längsverschieblich gelagert ist, der an seinem dem Folienschlauch 51 abgewandten Ende eine auf einer gestellfesten Nockenbahn 6 abrollende Rolle 4 und an seinem dem Folienschlauch 51 zugewandten Ende die parallel zu diesem verlaufende Stirnfläche 54 besitzt. In der Innenführung ist eine den Bolzen 3 umschließende Druckfeder 5 vorgesehen, die sich einerseits auf einem Anschlag des Druckteils 1 und andererseits auf einem Anschlag des Bolzens 3 abstützt. Der Bolzen 3 und dessen Rolle 4 ist also druckbelastet und dadurch stets in Kontakt mit der Nockenbahn 6.

Die Nockenbahn 6 ist höhenverstellbar. Von der Nockenbahn 6 stehen Bolzen ab, die in Langlöcher 7 eingreifen, welche in gehäusefesten Laschen vorgesehen sind. Die Nockenführungsbahn 6 ist also über die Bolzen und die Langlöcher 7 mit dem Gestell verschraubt.

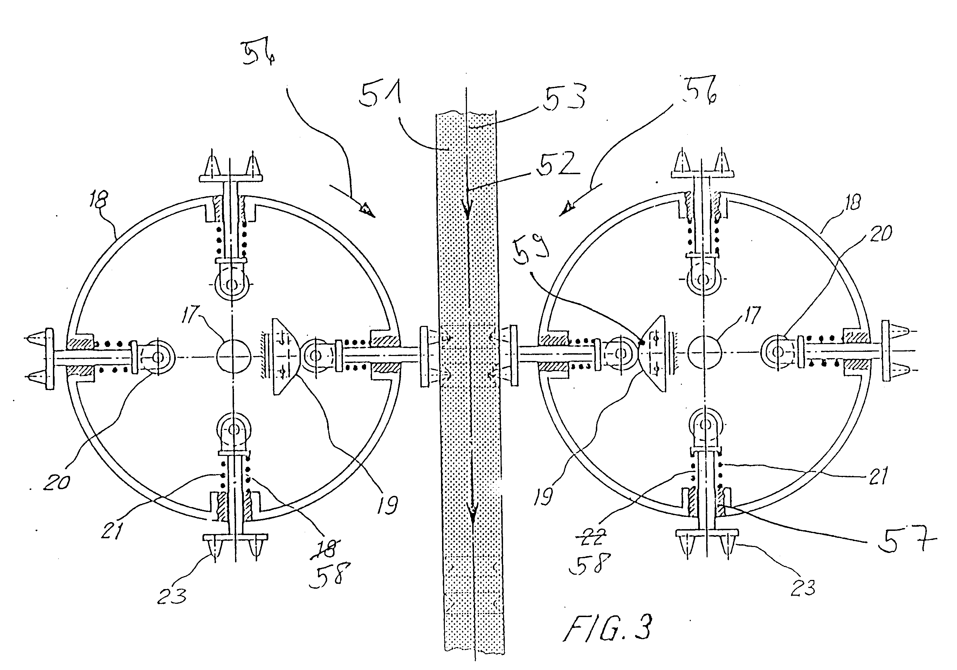

Die Figur 3 zeigt die Formteil-Station der Maschine. Diese Station ist oberhalb des in Fig. 1 gezeigten Einzugsbereichs der Maschine angeordnet. Die Darstellung der Figur 3 liegt in einer Ebene, die senkrecht zur Zeichenebene der Fig. 1 verläuft. Auf beiden Seiten des in Richtung des Pfeiles 53 nach unten geführten Folienschlauchs 51 ist jeweils ein Zylinder angeordnet. Jeder Zylinder ist um eine Achse 17 drehbar gelagert. Die Achsen 17 verlaufen im gleichen Abstand einander gegenüberliegend von der Mittenachse 53 des Folienschlauchs 51. An den Umfangsflächen der Zylinder 18 sind die Formteile 23 angebracht. Die Drehgeschwindigkeiten der Zylinder 18, angedeutet durch die Pfeile 56, sind entgegengesetzt und gleich groß. Sie sind derart gewählt, daß die Umfangsgeschwindigkeit der Formteile 23 im Eingriffsbereich mit dem Folienschlauch 51 gleich groß ist und gleich gerichtet ist wie die Geschwindigkeit 52 des Folienschlauches 51. Die Formteile 23 verlaufen in einer vertikalen, senkrecht zur Ebene der Führungsteile 2 und Druckteile 1 verlaufenden Ebene. Sie besitzen in Längsrichtung des Folienschlauches 51 zwei dem Folienschlauch 51 zugewandte, dornförmige Erhebungen 23. Die Formteile 23 sind an der Umfangsfläche jedes Zylinders 18 in jeweils gleichem Abstand voneinander angeordnet. In einer Führung 57 senkrecht zur Umfangsfläche der Zylinder 18 ist jeweils ein Bolzen 58 längsverschieblich gelagert, der an seinem dem Folienschlauch 51 abgewandten Ende eine auf einer gestellfesten Nockenbahn 19 abrollende Rolle 20 und an seinem dem Folienschlauch 51 zugewandten Ende die diesem zugewandten, dornförmigen Erhebungen 23 besitzt. Innerhalb der Führungen 57 ist jeweils eine den Bolzen 58 umschließende Druckfeder 21 vorgesehen, die sich einerseits auf einem Anschlag der Führung 57 und andererseits auf einem Anschlag des Bolzens 58 abstützt. Der Bolzen 58 ist also federbelastet, so daß er stets in Kontakt mit der Nockenführungsbahn 19 ist. Die Nockenbahn 19 weist in demjenigen Bereich, in dem die dornförmigen Erhebungen 23 mit dem Folienschlauch 51 in Eingriff gelangen, eine Erhebung 59 auf. Hierdurch werden die dornförmigen Erhebungen 23 im Eingriffsbereich mit dem Folienschlauch 51 noch zusätzlich auf diesen zu bewegt, so daß zuverlässig die erforderlichen Behälter-"Ohren" erzeugt werden.

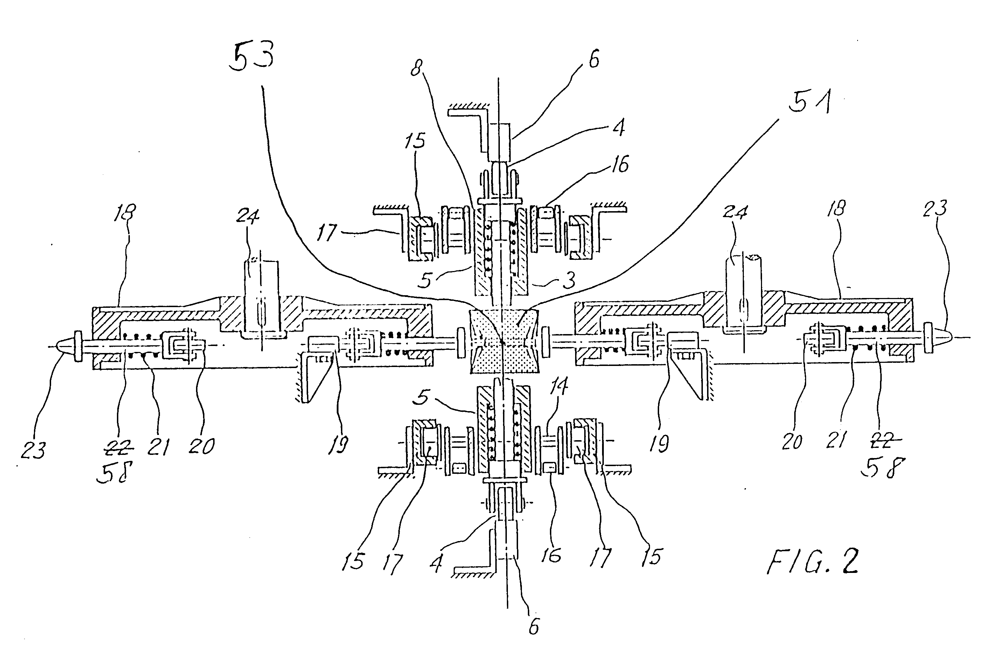

Die Fig. 2 zeigt die Vorrichtung in einem Schnitt von oben. In der Mitte der Darstellung verläuft der Folienschlauch 51. Links und rechts sind die in Figur 3 gezeigten Zylinder 18 dargestellt. Diese sind um Wellen 24 drehbar gelagert. Gleiche Teile sind mit gleichen Bezugsziffern versehen, so daß sie nicht erneut beschrieben werden müssen. Oberhalb und unterhalb des Folienschlauchs 51 sind die Druckstücke 1 im Schnitt dargestellt.

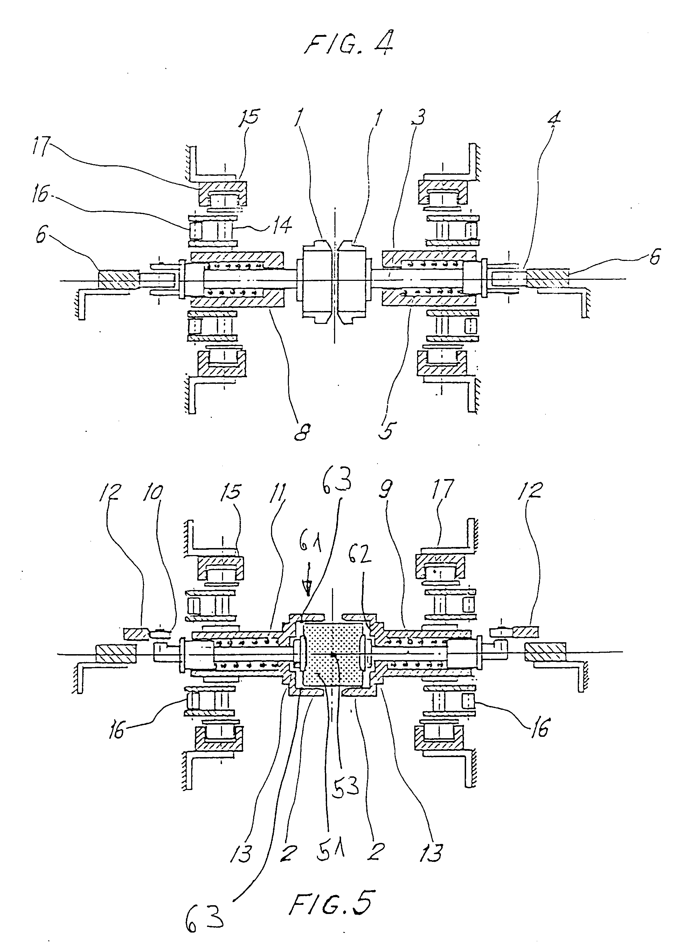

Die Fig. 4 zeigt die Druckstücke 1 in einer vergrößerten Darstellung von oben.

Fig. 5 zeigt die Führungsstücke, ebenfalls in einer vergrößerten Darstellung von oben. Jedes Führungsstück besitzt einen dem Folienschlauch 51 zugewandten, U-förmigen Teil 61 mit einer an eine Fläche des Folienschlauches 51 in Anlage bringbaren Basisfläche 62 und zwei rechtwinkelig abstehende, den Folienschlauch 51 einfassenden Seitenflächen 63.

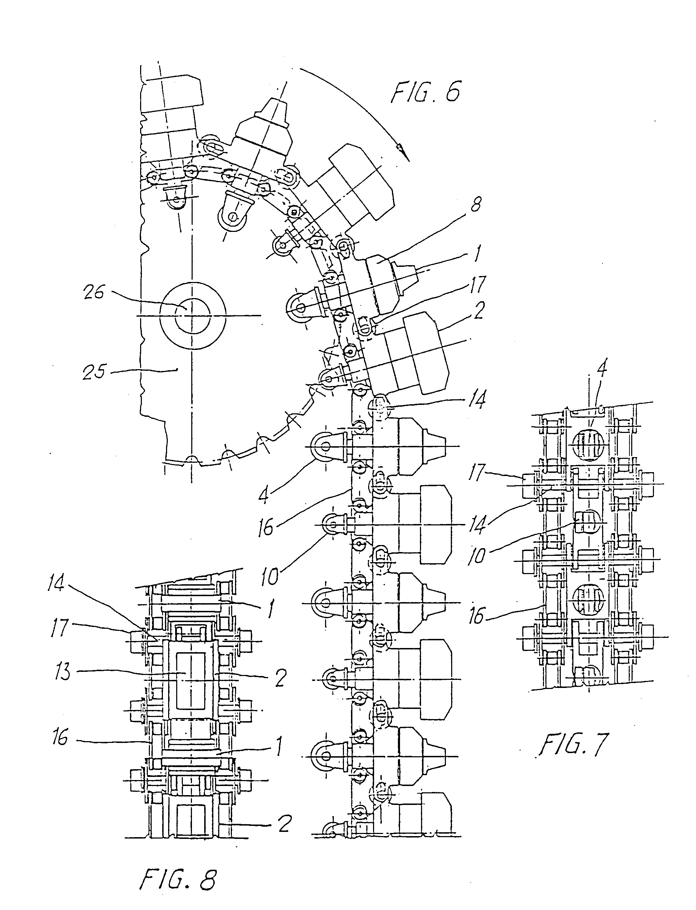

Die Fig. 6 zeigt eine Kette mit daran angeordneten Druckteilen 1 und Führungsteilen 2. Die Kette ist über ein oberes Kettenrad 25 geführt, das um eine horizontale, im Abstand vom Folienschlauch angeordnete Achse 26 drehbar gelagert ist. Die Fig. 7 und 8 zeigen die Kette von innen bzw. außen.

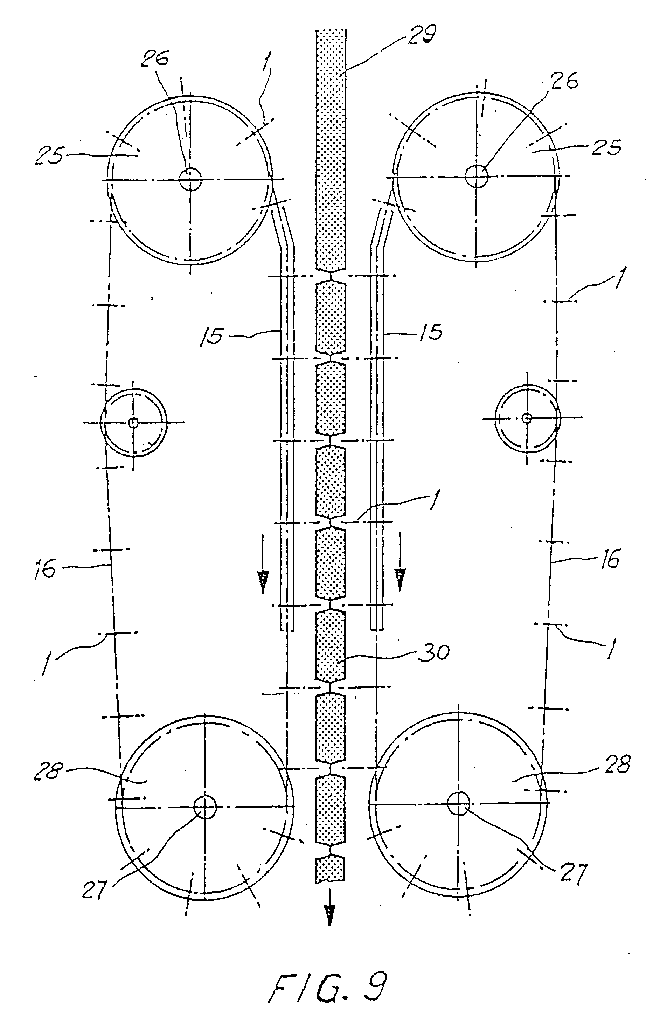

In Fig. 9 sind ebenfalls die Führungsteile und Druckteile an zwei Ketten angeordnet. Die Ketten verlaufen in einer vertikalen Ebene beidseits des Folienschlauches 29 und symmetrisch zu diesem. Jede Kette ist über ein oberes Kettenrad 25 und über ein unteres Kettenrad 28 geführt. Die oberen Kettenräder 25 sind um eine jeweils horizontale, im Abstand vom Folienschlauch 29 angeordnete Achse 26 drehbar gelagert. Die unteren Kettenräder 28 sind um eine jeweils horizontale, im Abstand vom Folienschlauch 29 angeordnete Achse 27 drehbar gelagert. Mit 15 sind die einander zugewandten Eingriffsbereiche der Ketten bezeichnet.

Die Arbeitsweise der Maschine wird schematisch aus der Fig. 9 ersichtlich. Der Folienschlauch 29 bewegt sich in der Fig. 9 von oben nach unten. Durch den Eingriff der Druckteile 1 werden einander gegenüberliegende Wände des Folienschlauchs aneinander gepreßt und anschließend verschweißt. Zwischen diesen Bereichen liegen die eigentlichen Behälterbereiche 30. Der Folienschlauch verläßt also die Maschine als eine Kette zusammenhängender Verpackungsbehälter. Die Verpackungsbehälterkette besteht dann aus gleichbeabstandeten Behälterbereichen 30 und diese verbindenden Verbindungsbereichen.

Wenn mit der Maschine eine Flüssigkeit verpackt wird, liegt der Flüssigkeitsspiegel höher als der in Bewegungsrichtung des Folienschlauches 51 erste Eingriffsbereich der Druckstücke. Dieser erste Eingriffsbereich ist in Fig. 1 mit 71 bezeichnet. Der Flüssigkeitsspiegel liegt also oberhalb dieses Bereiches etwa auf dem mit 72 bezeichneten Niveau. Hierdurch wird sichergestellt, daß keinesfalls Luft in die Behälter eingeschlossen wird. Die Dosierung erfolgt über die Dosierungsflächen 13 der Führungsstücke 2.

## Patentansprüche

1. Abfüll- und Verpackungsmaschine zum kontinuierlichen Abfüllen und Verpacken von Behältern aus einem Folienschlauch (51) bestehend aus
einem Gestell, in dem ein langgestreckter, im Querschnitt rechteckiger Folienschlauch (51) in vertikaler Richtung nach unten (52) führbar ist,
mehreren jeweils gleichbeabstandeten Führungsteilen (2), die auf einander jeweils gegenüberliegenden Seiten des Folienschlauches (51) mit derselben Geschwindigkeit wie dieser längsbeweglich führbar sind,
mehreren jeweils gleichbeabstandeten, zwischen den Führungsteilen (2) angeordneten und mit diesen mitbewegbaren, in Richtung zum Folienschlauch (51) konvex ausgebildeten Druckteilen (1), die eine dem Folienschlauch (51) zugewandte Stirnfläche (54) und daran anschließende Seitenflächen (55) besitzen,
und mindestens jeweils einem Formteil (23) auf einander gegenüberliegenden Seiten des Folienschlauches (51), die in einer vertikalen, senkrecht zur Ebene der Führungsteile (2) und Druckteile (1) verlaufenden Ebene oberhalb des Eingriffsbereichs der Führungsteile (2) und Druckteile (1) mit derselben Geschwindigkeit (56) wie der Folienschlauch (51) mit diesem in Eingriff bringbar sind,
dadurch gekennzeichnet,
daß die Führungsteile (2) ein dem Folienschlauch (51) zugewandtes, U-förmiges Teil (61) mit einer an eine Fläche des Folienschlauches (51) in Anlage bringbaren Basisfläche (62) und zwei rechtwinkelig abstehenden, den Folienschlauch (51) einfassenden Seitenflächen (63) besitzen,
daß jedes Führungsteil (2) eine senkrecht zum Folienschlauch verlaufende Innenführung besitzt, in der ein Bolzen (9) längsverschieblich gelagert ist, der an seinem dem Folienschlauch (51) abgewandten Ende eine auf einer gestellfesten Nockenbahn (12) abrollenden Rolle (10) und an seinem dem Folienschlauch (51) zugewandten Ende eine parallel zu diesem verlaufende Dosierungsfläche (13) besitzt
und daß jedes Formteil (23) in Längsrichtung des Folienschlauches (51) zwei diesem zugewandte, dornförmige Erhebungen (23) besitzt.

2. Maschine nach Anspruch 1, dadurch gekennzeichnet, daß in der Innenführung eine den Bolzen (9) umschließende, sich einerseits auf einem Anschlag des Führungsteils (2) und andererseits auf einem Anschlag des Bolzens (9) abstütztende Druckfeder (11) vorgesehen ist.

3. Maschine nach Anspruch 1 oder 2, dadurch gekennzeichnet, daß die Nockenbahn (12) verstellbar ist.

4. Maschine nach einem der vorhergehenden Ansprüche, dadurch gekennzeichnet, daß die Seitenflächen (55) der Druckteile (1) eben sind und im stumpfen Winkel von der Stirnfläche (54) weg verlaufen.

5. Maschine nach einem der vorhergehenden Ansprüche, dadurch gekennzeichnet, daß jeder Druckteil (1) eine senkrecht zum Folienschlauch (51) verlaufende Innenführung besitzt, in der ein Bolzen (3) längsverschieblich gelagert ist, der an seinem dem Folienschlauch (51) angewandten Ende eine auf einer gestellfesten Nockenbahn (6) abrollende Rolle (4) und an seinem dem Folienschlauch (51) zugewandten Ende die parallel zu diesem verlaufende Stirnfläche (54) besitzt.

6. Maschine nach Anspruch 5, dadurch gekennzeichnet, daß in der Innenführung eine den Bolzen (3) umschließende, sich einerseits auf einem Anschlag des Druckteils (1) und andererseits auf einem Anschlag des Bolzens (3) abstützende Druckfeder (5) vorgesehen ist.

7. Maschine nach Anspruch 5 oder 6, dadurch gekennzeichnet, daß die Nockenbahn (6) verstellbar, insbesondere höhenverstellbar (7), ist.

8. Maschine nach einem der vorhergehenden Ansprüche, dadurch gekennzeichnet, daß die Führungsteile (2) und/oder die Druckteile (11) an zwei in einer vertikalen Ebene beidseits des Folienschlauches (51) und symmetrisch zu diesem verlaufenden Ketten (16) angeordnet sind.

9. Maschine nach Anspruch 8, dadurch gekennzeichnet, daß jede Kette über ein oberes (25) und unteres (28), um eine jeweils horizontale, im Abstand vom Folienschlauch (29) angeordnete Achse (26, 27) drehbar gelagertes Kettenrad geführt ist.

10. Maschine nach einem der vorhergehenden Ansprüche, dadurch gekennzeichnet, daß die Formteile (23) an den Umfangsflächen von zwei Zylindern (18) angebracht sind, die um zwei von dem Folienschlauch (51) gleichbeabstandete Achsen (17) auf gegenüberliegenden Seiten desselben drehbar gelagert sind.

11. Maschine nach Anspruch 10, dadurch gekennzeichnet, daß an der Umfangsfläche jedes Zylinders (18) mehrere Formteile (23) im jeweils gleichen Abstand voneinander angeordnet sind.

12. Maschine nach Anspruch 10 oder 11, dadurch gekennzeichnet, daß in einer Führung (57) senkrecht zur Umfangsfläche der Zylinder (18) jeweils ein Bolzen (58) längsverschieblich gelagert ist, der an seinem dem Folienschlauch (51) abgewandten Ende eine auf einer gestellfesten Nockenbahn (19) abrollende Rolle (20) und an seinem dem Folienschlauch (51) zugewandten Ende die diesem zugewandten, dornförmigen Erhebungen (23) besitzt.

13. Maschine nach Anspruch 12, dadurch gekennzeichnet, daß innerhalb der Führung (57) eine den Bolzen (58) umschließende, sich einerseits auf einem Anschlag der Führung (57) und andererseits auf einem Anschlag des Bolzens (58) abstützende Druckfeder (21) vorgesehen ist.

14. Maschine nach Anspruch 12 oder 13, dadurch gekennzeichnet, daß die Nockenbahn (19) in demjenigen Bereich, in dem die dornförmigen Erhebungen (23) mit dem Folienschlauch (51) in Eingriff gelangen, eine Erhebung (59) aufweist.

15. Maschine nach einem der Ansprüche 10 bis 14, dadurch gekennzeichnet, daß die Achsen (17) der Zylinder (18) mit dem Antrieb der Führungsteile (2) und Druckteile (1) bzw. dem Antrieb von deren Ketten (16) durch ein Zahnradgetriebe bzw. Winkelgetriebe und/oder Zahnriemen verbunden sind.

16. Maschine nach einem der vorhergehenden Ansprüche, gekennzeichnet durch eine Schweißvorrichtung in den Stirnflächen (54) der Druckteile (1).

17. Maschine nach Anspruch 16, dadurch gekennzeichnet, daß die Schweißvorrichtung elektrische Heizdrähte umfaßt.

## Claims

1. Filling and packaging machine for the continuous filling and packaging of containers made from a tube of flexible sheeting (51), comprising
a frame in which a longitudinally extended tube of flexible sheeting (51) of rectangular cross section can be guided in a vertically downward direction (52),
several mutually equidistant guide elements (2) which can be guided on mutually opposing sides of the tube of flexible sheeting (51) while travelling in the longitudinal direction at the same speed as the tube of flexible sheeting (51),
several mutually equidistant compression elements (1) convexly shaped in the direction of the tube of flexible sheeting (51) and arranged between the guide elements (2), and travelling with these, said compression elements (1) possessing an end face (54) directed towards the tube of flexible sheeting (51) and side faces (55) adjoining said end face (54),
and at least one formed part (23) in each case on opposing sides of the tube of flexible sheeting (51) which can be brought into engagement with the tube of flexible sheeting (51) in a vertical plane perpendicular to the plane of the guide elements (2) and compression elements (1), above the area of engagement of the guide elements (2) and compression elements (1), while travelling at the same speed (56) as that of the tube of flexible sheeting (51),
**characterised in that**
the guide elements (2) possess a U-shaped part (61) directed towards the tube of flexible sheeting (51), with a base surface (62) which can be brought into contact with a face of the tube of flexible sheeting (51), and two side faces (63) set off at right angles which enclose the tube of flexible sheeting (51),
each guide element (2) possesses an inner guide running perpendicular to the tube of flexible sheeting (51), in which inner guide a longitudinally displaceable pin (9) is located which possesses at the end facing away from the tube of flexible sheeting (51) a roller (10) running on a cam track (12) fixed to the frame, and at the end facing the tube of flexible sheeting (51) a metering land (13) running parallel to the tube of flexible sheeting (51),
and each formed part (23) possesses two thorn-shaped projections (23) arranged in the longitudinal direction of the tube of flexible sheeting (51) and directed towards it.

2. Machine according to Claim 1, characterised in that, provided in the inner guide is a compression spring (11) arranged around the pin (9) and supported at one end by a shoulder of the guide element (2) and at the other end by a shoulder of the pin (9).

3. Machine according to Claim 1 or 2, characterised in that the cam track (12) is adjustable.

4. Machine according to one of the preceding claims, characterised in that the side faces (55) of the compression elements (1) are flat and run away from the end face (54) at an obtuse angle.

5. Machine according to one of the preceding claims, characterised in that each compression element (1) possesses an inner guide running perpendicular to the tube of flexible sheeting (51), in which inner guide a longitudinally displaceable pin (3) is located which possesses at the end facing away from the tube of flexible sheeting (51) a roller (4) running on a cam track (6) fixed to the frame, and at the end facing towards the tube of flexible sheeting (51) the end face (54) which runs parallel to the tube of flexible sheeting (51).

6. Machine according to Claim 5, characterised in that provided in the inner guide is a compression spring (5) arranged around the pin (3), which compression spring (5) is supported at one end by a shoulder of the compression element (1), and at the other end by a shoulder of the pin (3).

7. Machine according to Claim 5 or 6, characterised in that the cam track (6) is adjustable, and in particular height-adjustable (7).

8. Machine according to one of the preceding claims, characterised in that the guide elements (2) and/or the compression elements (11) are arranged on two chains (16) running in a vertical plane either side of, and symmetrically to, the tube of flexible sheeting (51).

9. Machine according to Claim 8, characterised in that each chain is guided by a top (25) and bottom (28) rotationally mounted chain pulley, each chain pulley being located on a horizontal shaft (26, 27) away from the tube of flexible sheeting (29).

10. Machine according to one of the preceding claims, characterised in that the formed parts (23) are mounted on the circumferential surfaces of two cylinders (18) which are rotationally mounted on two shafts (17) equidistant from, and on opposite sides of, the tube of flexible sheeting (51).

11. Machine according to Claim 10, characterised in that several formed parts (23) are arranged at equal intervals around the circumferential surface of each cylinder (18).

12. Machine according to Claim 10 or 11, characterised in that, in a guide (57) perpendicular to the circumferential surface of each cylinder (18) is mounted a longitudinally displaceable pin (58) which possesses at the end facing away from the tube of flexible sheeting (51) a roller (20) running on a cam track (19) fixed to the frame, and at the end facing the tube of flexible sheeting (51) the thorn-shaped projections (23) directed towards the tube of flexible sheeting (51).

13. Machine according to Claim 12, characterised in that, provided inside the guide (57) is a compression spring (21) arranged around the pin (58), which compression spring (21) is supported at one end by a shoulder in the guide (57) and at the other end by a shoulder of the pin (58).

14. Machine according to Claim 12 or 13, characterised in that the cam track (19) exhibits an elevation (59) in that area in which the thorn-shaped projections (23) are brought into engagement with the tube of flexible sheeting (51).

15. Machine according to one of Claims 10 to 14, characterised in that the shafts (17) of the cylinders (18) are connected to the drive of the guide elements (2) and compression elements (1), or with the drive of their chains (16), by toothed gearing, angle gearing and/or toothed belts.

16. Machine according to one of the preceding claims, characterised by a welding device in the end faces (54) of the compression elements (1).

17. Machine according to Claim 16, characterised in that the welding device contains electric resistance wires.

## Revendications

1. Machine de remplissage et d'emballage pour le remplissage et l'emballage continus de récipients fabriqués à partir d'un film tubulaire (51) consistant en
un bâti dans lequel peut être guidé un film tubulaire (51) allongé et de section transversale rectangulaire en direction verticale vers le bas (52),
plusieurs parties de guidage (2) à même espacement, disposées sur des côtés opposés du film tubulaire (51) et qui peuvent être guidées pour se déplacer en sens longitudinal à la même vitesse que le film tubulaire,
plusieurs parties de pression (1) à même espacement, de forme convexe en direction du film tubulaire (51), disposées entre les pièces de guidage (2) et pouvant se déplacer avec ces dernières, lesdites pièces de pression possédant une face frontale (54) dirigée vers le film tubulaire (51) et des faces latérales (55) la jouxtant,
et au moins une pièce profilée (23) sur les côtés réciproquement opposés du film tubulaire (51) qui, dans un plan vertical perpendiculaire au plan des pièces de guidage (2) et des pièces de pression (1) au-dessus de la zone d'engagement des pièces de guidage (2) et des pièces de pression (1), peut être mise en prise à la même vitesse (56) que celle du film tubulaire (51) avec ce dernier,
caractérisée en ce que
les pièces de guidage (2) possèdent une pièce en forme de U (61) dirigée vers le film tubulaire (51), ayant une surface de base (62) pouvant être mise en contact avec une face du film tubulaire (51) et deux faces latérales (63) qui encadrent le film tubulaire (51),
que chaque pièce de guidage (2) possède un guidage intérieur s'étendant perpendiculairement par rapport au film tubulaire, dans lequel un boulon (9) est logé de manière à pouvoir se déplacer en sens longitudinal, qui à son extrémité détournée du film tubulaire (51) possède un rouleau (10) roulant sur une piste à cames (12) solidaire du bâti et, à son extrémité dirigée vers le film tubulaire (51), une surface de dosage (13) s'étendant parallèlement au film tubulaire,
et que chaque pièce profilée (23) possède deux saillies (23) en forme d'ergot en direction longitudinale du film tubulaire (51), dirigées vers le film tubulaire.

2. Machine selon la revendication 1, caractérisée en ce que dans le guidage intérieur est prévu un ressort de pression (11) entourant le boulon (9) et s'appuyant d'une part sur une butée de la pièce de guidage (2) et d'autre part sur une butée du boulon (9).

3. Machine selon les revendications 1 ou 2, caractérisée en ce que la piste à cames (12) est réglable.

4. Machine selon l'une quelconque des revendications précédentes, caractérisée en ce que les faces latérales (55) des pièces de pression (1) sont planes et s'étendent en s'écartant de la face frontrale (54) à angle obtus.

5. Machine selon l'une quelconque des revendications précédentes, caractérisée en ce que chaque pièce de pression (1) possède un guidage intérieur s'étendant perpendiculairement par rapport au film tubulaire (51), dans lequel un boulon (3) est logé de manière à pouvoir être déplacé en sens longitudinal, qui en son extrémité dirigée vers le film tubulaire (51) possède un rouleau (4) roulant sur une piste à cames (6) solidaire du bâti et en son extrémité dirigée vers le film tubulaire (51) la face frontale (54) s'étendant parallèlement au film tubulaire.

6. Machine selon la revendication 6, caractérisée en ce qu'est prévu dans le guidage intérieur un ressort de pression entourant le boulon (3) et s'appuyant d'une part sur une butée de la pièce de pression (1) et d'autre part sur une butée du boulon (3).

7. Machine selon les revendications 5 ou 6, caractérisée en ce que la piste à cames (6) est réglable, notamment en hauteur (7).

8. Machine selon l'une quelconque des revendications précédentes, caractérisée en ce que les pièces de guidage (2) et/ou les pièces de pression (11) sont disposées sur des chaînes (16) s'étendant en un plan vertical des deux côtés du film tubulaire (51) et symétriquement par rapport à celui-ci.

9. Machine selon la revendication 8, caractérisée en ce que chaque chaîne est guidée par des roues à chaînes supérieure (25) et inférieure (28) qui sont logées de manière à pouvoir tourner chacune autour d'un axe (26, 27) disposé horizontalement à distance du film tubulaire (29).

10. Machine selon l'une quelconque des revendications précédentes, caractérisée en ce que les pièces profilées (23) sont disposées sur les surfaces circonférencielles de deux cylindres (18) qui sont logés de manière à pouvoir tourner autour de deux axes (17) espacés à égale distance par rapport au film tubulaire (51) sur deux côtés opposés de celui-ci.

11. Machine selon la revendication 10, caractérisée en ce que sur la surface circonférencielle de chaque cylindre (18) plusieurs pièces profilées (23) sont disposées chacune à distance réciproque identique.

12. Machine selon les revendications 10 ou 11, caractérisée en ce que dans un guidage (57) perpendiculaire par rapport à la surface circonférencielle de chaque cylindre (18), un boulon (58) est logé de manière à pouvoir se déplacer en sens longitudinal qui, en son extrémité détournée du film tubulaire (51), présente un rouleau (20) roulant sur une piste à cames (19) solidaire du bâti et, en son extrémité dirigée vers le film tubulaire (51), des saillies (23) en forme d'ergot.

13. Machine selon la revendication 12, caractérisée en ce qu'à l'intérieur du guidage (57) est prévu un ressort de pression (21) entourant le boulon (58), qui s'appuie d'une part sur une butée du guidage (57) et d'autre part sur une butée du boulon (58).

14. Machine selon les revendications 12 ou 13, caractérisée en ce que la piste à cames (19) possède une élévation (59) dans la zone dans laquelle les saillies en forme d'ergot (23) sont mis en prise avec le film tubulaire (51).

15. Machine selon l'une quelconque des revendications 10 à 14, caractérisée en ce que les axes (17) des cylindres (18) sont raccordés à l'entraînement des pièces de guidage (2) et des pièces de pression (1) ainsi qu'à l'entraînement de leurs chaînes (16) par un engrenage a roues dentées ou un engrenage conique et/ou une courroie crantée.

16. Machine selon l'une quelconque des revendications précédentes, caractérisée par un dispositif de soudage dans les surfaces frontales (54) des pièces de pression (1).

17. Machine selon la revendication 16, caractérisée en ce que le dispositif de soudage comprend des fils chauffants électriques.
